# EUROPEAN PATENT SPECIFICATION

(11) **EP 1 314 504 B1**
(45) Date of publication and mention of the grant of the patent: **14.09.2005**
(21) Application number: 02445156.9
(22) Date of filing: 21.11.2002
(51) Int. Cl.: B23D 51/01, B27B 21/04, B23D 65/00

(54) **A handsaw and a method relating to the manufacture of a handsaw**
Handsäge und Verfahren bezüglich der Herstellung einer Handsäge
Scie à main et procédé relatif à la fabrication d'une scie à main

(30) Priority: 26.11.2001 SE 0103943
(43) Date of publication of application: 28.05.2003
(73) Proprietor: Kapman AB, 811 81 Sandviken (SE)
(72) Inventor: Löfgren, Per-Olof, 820 11 Vallsta (SE)
(74) Representative: Axelsson, Nils Ake A.L.

(56) References cited:
- EP-A- 1 104 689
- EP-A- 1 197 308
- US-A- 4 841 638

## Description

The present invention relates to a handsaw of the kind defined in the preamble of patent claim 1, and also to a method relating to the manufacture of such a handsaw (claim 14) as known from US 4 841 638.

It is previously known to manufacture handsaws in which the handle is comprised of two halves, which are assembled around one end of the saw blade, which end is adapted therefor. Respective halves of the handle are normally joined together by welding, preferably by ultrasound welding, although they may also be joined with the aid of screws, rivets or with the aid of glue. Respective halves of the handle are joined together with said end of the saw blade in a corresponding manner. All of these methods require the use of some kind of ancillary equipment, such as a welding machine, screw manipulating tools, screws, rivets, riveting tools or riveting machines, glue and glue applying equipment.

The majority of modern handsaw handles are made of some type of plastic material. The present invention is particularly suited for handles of plastic material, although it is not restricted to the use of such materials.

One object of the present invention is to provide a handsaw that can offer possibilities for a simplified and less expensive method with respect to its manufacture as well as its assembly, and therewith provide a less expensive saw that, nevertheless, has sawing properties that are equally as good as those of known saws.

This object and also further objects, made apparent in the following description, are achieved with a handsaw that includes the features set forth in claim 1, and by a method relating to the manufacture of a handsaw as defined in patent claim 14.

The first handle half is provided with a first array of so-called snap-elements on its inside facing towards the second handle half when assembling the handle halves together, and the second handle half is provided with a second array of snap-elements on its respective inside facing towards the first handle half, wherein the snap-elements of the first array are designed to engage with the snap-elements in the second array with a snap-action when assembling the handle, and in that the handle halves may thereby be fastened together solely through the medium of said snap-action.

The inventive handsaw can thus be manufactured both simply and inexpensively. The handle halves may, for instance, be extruded in a plastic material and the handle halves and the saw blade can be assembled together with the aid of a press that functions to press the parts together and therewith bring the snap-elements into mutual engagement, in direct connection with the production line for handle halves. The production process is therefore highly efficient.

The saw components can also be stored separately prior to assembly, and assembled together only when there is a need. A handle part may, for instance, be adapted for several different saw blades and the choice of the saw blade to which the handle shall be fitted is governed by the need. Alternatively, assembly can be effected without the aid of special tools or machines. In principle, anyone is able to fit the handle and saw blade together, whenever the need arises. It is conceivable to sell the saw unassembled, or as a saw set, and allow the purchaser to fit the handle and saw blade together himself. It is obvious that this is very favourable for all parties concerned, from an economic aspect.

The method of manufacturing a handsaw that includes a saw blade and a handle includes the following steps:
- manufacturing the handle in the form of a first and a second handle half;
- providing the first handle half with a first array of snap-elements on its inside facing towards the second handle half in assembly, and providing the second handle half with a second array of snap-elements on its respective inside facing towards the first handle half; and
- assembling the handle halves together at one end of the saw blade, wherewith the snap-elements of the first array pass into engagement with the snap-elements of the second array with a snap-action, wherewith the handle halves are held firmly together solely through the medium of said snap action.

This method provides simple and highly cost-effective manufacture of handsaws.

The snap-elements may, of course, have any one of many different designs, the majority of which are known *per se*. According to one embodiment, half of the snap-elements include snap-devices in the form of at least one shoulder, while the other half of the snap-elements include snap-devices in the form of at least one groove or slot. Other solutions are possible, for instance a solution in which two shoulders or hooks mutually co-act. It is normally required that the snap-elements are somewhat resilient, which is preferably achieved by the choice of an appropriate plastic material, which can be selected by the skilled person.

According to one preferred embodiment, the snap-elements have the form of mutually co-acting male and female elements, where a male element on one handle half co-acts with a corresponding female element on the other handle half. One of the handle halves may be provided solely with male elements and the other half provided with solely female elements. Alternatively, each of the handle halves may include both male and female elements.

According to the preferred embodiment, both male and female elements have a cylindrical shape and either the male or the female elements may have at least one shoulder disposed on its outside or inside, respectively, this shoulder being intended for co-action with at least one groove disposed on the inside of a co-acting female element or the outside of a co-acting male element, respectively, to provide said snap action.

According to one particularly preferred embodiment, the male and female elements have the form of hollow cylinders which mutually co-act in pairs, wherein the cylinder that forms a male element has an external diameter that is at most equal to the internal diameter of the cylinder that forms a corresponding female element. The provision of snap-elements in the form of hollow cylinders affords advantages from the aspect of production, when the handle halves are made of plastic and when it is important to have an adequate clearance.

According to one beneficial feature of the invention, at least part of the snap-elements are designed so that they will also function as securing means for the saw blade. In this regard, the saw blade is provided with holes at that end onto which the handle shall be fitted, wherein the holes are designed to allow at least a part of the snap-elements in at least one of said arrays of snap-elements to pass therethrough. One advantage thus provided is that the snap-elements can have a double function and obviate the need for special elements for securing the saw blade. Alternatively, however, it is fully conceivable for the saw blade to be fastened to the handle in a conventional manner, for instance with the aid of screws or glue.

According to a further beneficial feature of the invention, at least one of the handle halves includes on its inside stop members for stopping any movement of the saw blade in a direction towards a hand gripping the handle. These stop members are comprised beneficially, and at least partially, of snap-elements that are not used to secure the saw blade.

Further features and advantages will be apparent from the remaining dependent claims.

The invention will now be described in more detail with reference to a nonlimiting embodiment illustrated in the accompanying schematic drawings, in which:
- Figure 1: is a schematic partial view in perspective taken from one side of an assembled handsaw in accordance with the present invention;
- Figure 2: is a perspective partial view, from above, of a first handle half and parts of a saw blade comprised in a handsaw in accordance with the present invention; and
- Figure 3: is a perspective view, from above, of a second handle half comprised in a handsaw in accordance with the present invention.

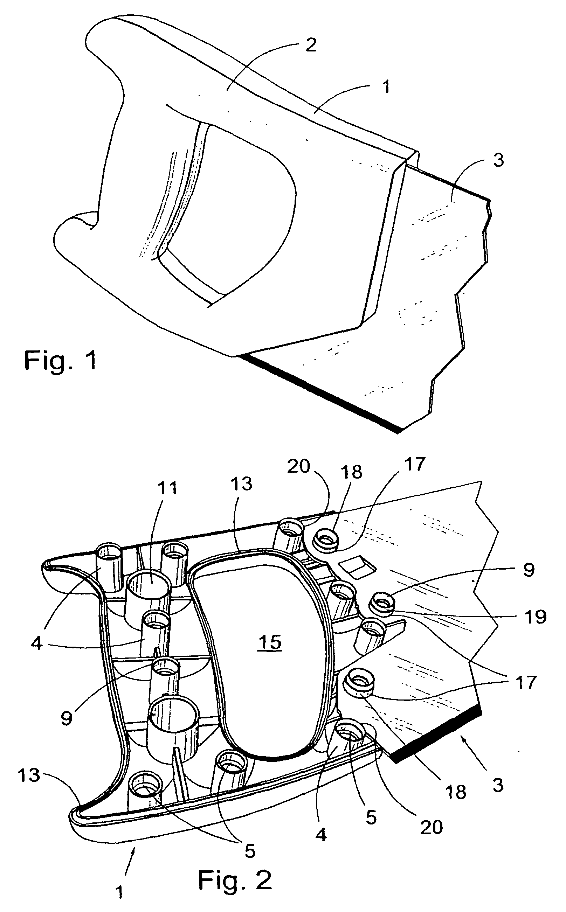

Figure 1 shows a partial view of a handsaw according to one embodiment of the present invention. The handsaw comprises a handle and a saw blade. The handle comprises two halves 1, 2, which are fitted together around one end of the saw blade 3. The handle halves are preferably extruded from plastic material, or may be produced in some other suitable manner.

The illustrated handsaw is of the kind that includes an opening 15 for accommodating the fingers of one hand. However, the invention is not restricted to a saw that includes this type of handle, but may also be used in respect of saws with which the handle is designed with a grip part around which the hand grasps and with which the saw blade is affixed at the upper part of the grip part, such as in the case of gardening saws or pruning saws, or other types of handles.

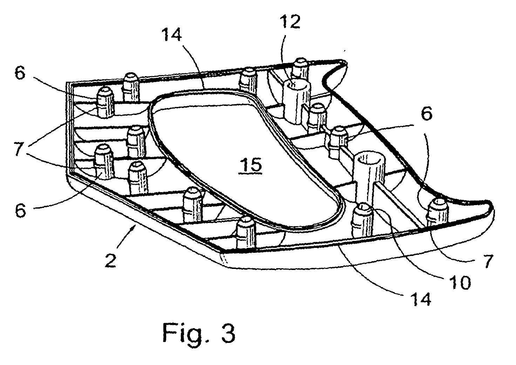

Figure 2 illustrates a first handle half 1 and parts of the saw blade 3, in accordance with the present invention. The handle half is provided on its inside, i.e. the side that is intended to face towards and be joined to the second handle half 2 when assembling the handle, with a number of hollow symmetrical projections 4. These projections form so-called snap-elements which are designed to co-act with corresponding snap-elements 6 on the second handle half 2, shown in Figure 3. In the illustrated embodiment, the snap-elements 4 of the first handle half 1 form female elements, whereas the snap-elements 6 on the second handle half 2 form male elements. When assembling the handle, the male elements 6 enter and engage with the female elements 4 by means of a snap-in action. The snap-in action is primarily achieved by providing each female element 4 with at least one groove 5 on its inside. This groove 5 is adapted to co-act with a shoulder or a projection 7 disposed on the outside of a corresponding male element 6. Because the various parts are somewhat resilient, as a result of a suitable choice of plastic material, the shoulder engages the groove through a so-called snap-in effect when assembling the handle. A vice versa arrangement with respect to the shoulders and the grooves would naturally also be feasible.

The inside of the female elements 4 preferably have a bevelled upper edge 9, to facilitate insertion of the male element 6 and also to assist in guiding said elements. The male elements will also preferably have a bevelled upper edge 10, although bevelled on the external side.

It should be mentioned that the male elements may well consist of solid bodies, by way of an alternative.

Advantageously, the two handle halves also include guide elements in the form of hollow cylinders 11, 12 that are inserted into one another when assembling the handle. The handle halves may also include guide elements in the form of a lip or rebate 13 and 14 along the outer edges of the respective handle halves, with the exception of the edge side where the saw blade is fitted. A guide element in the form of a lip or rebate may also be provided around the finger-grip opening 15.

The saw blade 3 includes a plurality of holes 17 at the end that is intended to be fitted together with the handle halves 1, 2. These holes are adapted to be fitted over and held firmly around certain of the snap-elements in one of the handle halves. These snap-elements thus also function as securing devices 18 for the saw blade. The holes in the saw blade are therefore arranged in accordance with a pattern that corresponds to a pattern formed by given snap-elements that are to be used as saw blade securing devices 18. In the case of the illustrated example, some of the female elements are also used as blade securing devices. This is beneficial, as it facilitates assembly. In order to further facilitate fitting of the saw blade over the combined snap-elements and securing devices 18, said elements and devices are conveniently provided with guide means in the form of a slight bevel 19 also on the outside of their respective upper edges. This guide means may also be configured so that said elements have a conical shape, which extends from the upper edge and down to the location of the saw blade.

The design of the end of the saw blade and the placement of the snap-elements in this part of the handle half is adapted so that some of the snap-elements, normally those that do not form blade securing devices, also function as saw blade stop members 20. By stop members is meant members that are situated so as to prevent any rotational movement of the saw blade in relation to the handle or movement of the saw blade towards the grip opening 15 in which the gripping hand is situated. Thus, the intention is that said stop members shall function as a protection against injury to the hand, should the saw blade come free from the blade securing devices for some reason or another and be pressed in a direction towards the grip opening. At least parts of the edge of the saw blade end will conveniently abut against the stop members subsequent to assembly, although the stop members will also fulfil their intended function should there be a gap between said edge and said stop members. It is preferred also in this case that certain of the female elements fulfil this function.

In assembly, the holes 17 provided in said one end of the saw blade 3 are placed over corresponding snap-elements/blade securing devices 4/18 of the one handle half 1. The two handle halves 1, 2 are then pressed together around said end of the saw blade, so that the male snap-elements 6 enter the female snap-elements 4 and so that the shoulders 7 on the male snap-elements engage with the grooves 5 within the female snap-elements. This results in a snap-fix action, which holds the handle halves and the saw blade securely together in a convenient and satisfactory manner. It can be mentioned that the shoulders and the grooves of respective snap-elements are situated so that it is necessary to press the handle halves further together, so as to bring the grooves 5 and shoulders 7 of respective snap-elements 4, 6 into positive engagement with each other, subsequent to having brought the handle halves into a position in which they abut one another. This results in biasing or prestressing of the snap-elements such as to counteract the occurrence of gaps. As earlier mentioned, it is necessary that the material, from which the handle is made, will allow a certain degree of resilience in the parts, in order for this to be achieved.

As the male elements 6 are pressed into the female elements, which also constitute blade securing devices 18, these female elements are pressed slightly outwards so as to obtain biasing or prestressing of the saw blade 3 around the female element. This biasing means that the saw blade is unable to slide axially around the cylindrical snap-elements, but is held securely instead.

It will be understood that the present invention is not restricted to the illustrated examples thereof, and that variations and modifications can be made in numerous ways, within the scope of the accompanying claims, as will be realised by those skilled in the art.

## Claims

1. Handsaw comprising a saw blade (3) and a handle which includes a first handle half (1) and a second handle half (2), said halves being assembled together in connection with one end of the saw blade (3), said first handle half (1) being provided with a first array of snap-elements (4) on its inside facing towards the second handle half (2) when assembling the handle halves together, and said second handle half (2) being provided with a second array of snap-elements (6) on its respective inside facing towards the first handle half (1), wherein the snap-elements of the first array are designed to engage with the snap-elements in the second array with a snap-action when assembling the handle, and the handle halves thereby being fastened together solely by means of said snap-action, **characterised in that** each handle half (1, 2) includes an opening (15) into which the fingers of the user can be inserted; and **in that** said snap-elements (4, 6) are disposed on respective sides of said opening (15).

2. Handsaw according to claim 1, **characterised in that** half of the snap-elements include snap-devices in the form of at least one shoulder (7), and the other half of the snap-elements include snap devices in the form of at least one groove (5).

3. Handsaw according to any one of claims 1-2, **characterised in that** one of said arrays includes snap-elements (4, 6) provided with snap-devices on its inside, and the other array includes snap-elements provided with snap-devices on its outside.

4. Handsaw according to any one of the preceding claims, **characterised in that** the snap-elements (4, 6) have the form of mutually co-acting male and female elements, such that a male element on one handle half co-acts with a corresponding female element on the other handle half.

5. Handsaw according to claim 4, **characterised in that** one of the handle halves (1, 2) is provided with solely male elements (6), and **in that** the other handle half is provided with solely female elements (4).

6. Handsaw according to claim 4, **characterised in that** each of said handle halves (1, 2) is provided with both male and female elements (4, 6).

7. Handsaw according to any one of claims 4-6, **characterised in that** both male and female elements (4, 6) have a cylindrical shape and that either the male elements (6) or the female elements (4) include at least one shoulder (7) on its outside or its inside, respectively, wherein said shoulder (7) is adapted for co-action with at least one groove (5) provided on the inside of a co-acting female element or on the outside of a co-acting male element, respectively, such as to provide said snap-action.

8. Handsaw according to claim 7, **characterised in that** both male and female elements (4, 6) have the form of hollow cylinders which mutually co-act in pairs, wherein the cylinder that forms a male element (6) has ah outer diameter which at most is equal to the internal diameter of the cylinder that forms the corresponding female element (4).

9. Handsaw according to any one of the preceding claims, **characterised in that** at least some of the snap-elements (4, 6) are designed to function also as saw blade securing devices.

10. Handsaw according to claim 9, **characterised in that** the saw blade (3) is provided with holes (17) in said end intended for assembly with the handle; and **in that** said holes (17) are adapted to allow at least some of the snap-elements in at least one of said snap-element arrays to pass therethrough.

11. Handsaw according to claim 9 or 10, **characterised in that** at least one of the handle halves includes, on its inside, at least one stop member (20) for stopping any movement of the saw blade (2) in a direction towards a hand gripping said handle.

12. Handsaw according to claim 11, **characterised** that at least parts of the side edge of said end of the blade (3) abut the stop members (20) subsequent to assembly.

13. Handsaw according to claim 12, **characterised in that** said stop members (20) are comprised at least partially of snap-elements that are not used to secure the saw blade.

14. Method of producing a handsaw according to any one of the preceding claims and that includes a saw blade (3) and a handle, said method including the following steps:
• manufacturing the handle in the form of a first and a second handle half;
• providing the first handle half (1) with a first array of snap-elements (4) on its inside facing towards the second handle half (2) in assembly, and providing the second handle half (2) with a second array of snap-elements (6) on its respective inside facing towards the first handle half (1); and
• assembling the handle halves together at one end of the saw blade, wherewith the snap-elements of the first array pass into engagement with the snap-elements of the second array with a snap-action, wherewith the handle halves are held firmly together solely through the medium of said snap action.

15. Method according to claim 14, **characterised by** providing holes (17) in the end of the saw blade, at which the handle is assembled, and having said holes (17) adapted to allow at least some of the snap-elements in at least one of said arrays of snap-elements to pass through.

16. Method according to claim 15, **characterised in that** when assembling the handle halves (1, 2), at least some of the snap-elements (4, 6) in at least one of said arrays of snap-elements are passed through said holes (17) in the end of the saw blade,
wherein the saw blade is assembled with the handle at the same time as the handle halves are assembled together; and that securing of the saw blade in the handle is also achieved solely through the medium of said snap-action.

## Patentansprüche

1. Handsäge mit einem Sägeblatt (3) und einem Handgriff, der eine erste Handgriffhälfte (1) und eine zweite Handgriffhälfte (2) aufweist, wobei die Hälften in Verbindung mit einem Ende des Sägeblattes (3) zusammengebaut sind, die erste Handgriffhälfte (1) mit einer ersten Gruppierung von Schnappelementen (4) auf ihrer Innenseite unter Zukehrung zu der zweiten Handgriffhälfte (2) versehen ist, wenn die Handgriffhälften zusammengebaut werden, und die zweite Handgriffhälfte (2) mit einer zweiten Gruppierung von Schnappelementen (6) auf ihrer entsprechenden Innenseite versehen ist unter Zukehrung zu der ersten Handgriffhälfte (1), wobei die Schnappelemente der ersten Gruppierung ausgestaltet sind, um mit den Schnappelementen in der zweiten Gruppierung mit einer Schnapptätigkeit in Eingriff zu kommen, wenn der Handgriff zusammengebaut wird, und die Handgriffhälften **dadurch** nur mittels der Schnapptätigkeit zusammen befestigt sind, **dadurch gekennzeichnet, daß** jede Handgriffhälfte (1, 2) eine Öffnung (15) aufweist, in welche die Finger des Benutzers eingeführt werden können; und daß die Schnappelemente (4, 6) auf entsprechenden Seiten der Öffnung (15) angeordnet sind.

2. Handsäge nach Anspruch 1, **dadurch gekennzeichnet, daß** die Hälfte der Schnappelemente Schnappvorrichtungen in der Form von mindestens einer Schulter (7) aufweist und die andere Hälfte der Schnappelemente Schnappvorrichtungen in der Form von mindestens einer Nut (5) aufweist.

3. Handsäge nach einem der Ansprüche 1 - 2, **dadurch gekennzeichnet, daß** eine der Gruppierungen Schnappelemente (4, 6) aufweist, die auf ihrer Innenseite mit Schnappvorrichtungen versehen ist und daß die andere Gruppierung Schnappelemente aufweist, die auf ihrer Außenseite mit Schnappvorrichtungen versehen ist.

4. Handsäge nach einem der vorhergehenden Ansprüche, **dadurch gekennzeichnet, daß** die Schnappelemente (4, 6) die Form von wechselseitig zusammenwirkenden Einsteck- und Aufnahmeelementen derart haben, daß ein Einsteckelement auf einer Handgriffhälfte mit einem entsprechenden Aufnahmeelement auf der anderen Handgriffhälfte zusammenwirkt.

5. Handsäge nach Anspruch 4, **dadurch gekennzeichnet, daß** eine der Handgriffhälften (1, 2) nur mit Einsteckelementen (6) versehen ist und daß die andere Handgriffhälfte nur mit Aufnahmeelementen (4) versehen ist.

6. Handsäge nach Anspruch 4, **dadurch gekennzeichnet, daß** jede der Handgriffhälften (1, 2) sowohl mit Einsteck- als auch Aufnahmeelementen (4, 6) versehen ist.

7. Handsäge nach einem der Ansprüche 4 bis 6, **dadurch gekennzeichnet, daß** sowohl die Einsteck- als auch Aufnahmeelemente (4, 6) eine zylindrische Gestalt haben und daß entweder die Einsteckelemente (6) oder die Aufnahmeelemente (4) auch ihrer Außenseite bzw. ihrer Innenseite mindestens eine Schulter (7) aufweisen, wobei die Schulter (7) für ein Zusammenwirken mit mindestens einer Nut (5) geeignet ausgestaltet ist, die auf der Innenseite eines zusammenwirkenden Aufnahmeelements bzw. auf der Außenseite eines zusammenwirkenden Einsteckelements vorgesehen ist, um die Schnapptätigkeit vorzusehen.

8. Handsäge nach Anspruch 7, **dadurch gekennzeichnet, daß** sowohl die Einsteck- als auch Aufnahmeelemente (4, 6) die Form von hohlen Zylindern haben, die wechselseitig in Paaren zusammenwirken, wobei der Zylinder, der ein Einsteckelement (6) bildet, einen Außendurchmesser hat, der höchstens gleich dem Innendurchmesser des Zylinders ist, welcher das entsprechende Aufnahmeelement (4) bildet.

9. Handsäge nach einem der vorhergehenden Ansprüche, **dadurch gekennzeichnet, daß** mindestens einige der Schnappelemente (4, 6) ausgestaltet sind, um auch als Sägeblattsicherungsvorrichtungen zu fungieren.

10. Handsäge nach Anspruch 9, **dadurch gekennzeichnet, daß** das Sägeblatt (3) in dem Ende mit Löchern (17) versehen ist, welche für den Zusammenbau mit dem Handgriff vorgesehen sind, und daß die Löcher (17) geeignet ausgestaltet sind, um es mindestens einigen der Schnappelemente in mindestens einer der Schnappelementgruppierungen zu ermöglichen, durch diese hindurchzugehen.

11. Handsäge nach Anspruch 9 oder 10, **dadurch gekennzeichnet, daß** mindestens eine der Handgriffhälften auf ihrer Innenseite mindestens ein Anschlagteil (20) aufweist zum Anhalten einer Bewegung des Sägeblattes (3) in einer Richtung zu einer den Handgriff ergreifenden Hand hin.

12. Handsäge nach Anspruch 11, **dadurch gekennzeichnet, daß** mindestens Teile der Seitenkante des Endes des Blattes (3) nach dem Zusammenbau zu den Anschlagteilen (20) in Widerlage treten.

13. Handsäge nach Anspruch 12, **dadurch gekennzeichnet, daß** die Anschlagteile (20) mindestens teilweise aus Schnappelementen bestehen, die nicht verwendet werden, um das Sägeblatt zu befestigen.

14. Verfahren zur Herstellung einer Handsäge nach einem der vorhergehenden Ansprüche, die ein Sägeblatt (3) und einen Handgriff aufweist, wobei das Verfahren die folgenden Schritte aufweist:
• Herstellen des Handgriffs in der Form einer ersten und einer zweiten Handgriffhälfte;
• Versehen der ersten Handgriffhälfte (1) mit einer ersten Gruppierung von Schnappelementen (4) auf ihrer Innenseite, welche beim Zusammenbau auf die zweite Handgriffhälfte (2) hin gerichtet ist, und Versehen der zweiten Handgriffhälfte (2) mit einer zweiten Gruppierung von Schnappelementen (6) auf ihrer entsprechenden Innenseite, welche zu der ersten Handgriffhälfte (1) hin zugekehrt ist, und
• Zusammenbauen der Handgriffhälften an einem Ende des Sägeblattes, wobei die Schnappelemente der ersten Gruppierung in Eingriff mit den Schnappelementen der zweiten Gruppierung bei einer Schnapptätigkeit gelangen, wobei die Handgriffhälften nur vermittels der Schnapptätigkeit fest zusammengehalten werden.

15. Verfahren nach Anspruch 14, **gekennzeichnet durch** das Vorsehen von Löchern (17) in dem Ende des Sägeblattes, an welchem der Handgriff angebaut wird und welches die Löcher (17) hat, die geeignet ausgestaltet sind, um es mindestens einigen der Schnappelemente in mindestens einer der Gruppierungen von Schnappelementen zu ermöglichen, **durch** diese hindurchzugelangen.

16. Verfahren nach Anspruch 15, **dadurch gekennzeichnet, daß** beim Zusammenbau der Handgriffhälften (1, 2) mindestens einige der Schnappelemente (4, 6) in mindestens einer der Gruppierungen von Schnappelementen durch die Löcher (17) in dem Ende des Sägeblattes hindurchgeführt werden, wobei das Sägeblatt mit dem Handgriff zur gleichen Zeit zusammengebaut wird, wie die Handgriffhälften zusammengebaut werden; und daß das Befestigen des Sägeblattes in dem Handgriff auch nur vermittels der Schnapptätigkeit erreicht wird.

## Revendications

1. Scie manuelle comprenant une lame de scie (3) et un manche comportant une première moitié de manche (1) et une seconde moitié de manche (2), ces moitiés étant assemblées ensemble en liaison avec une extrémité de la lame de scie (3), la première moitié de manche (1) comportant un premier réseau d'éléments d'encliquetage (4) sur son intérieur tourné vers la seconde moitié de manche (2) lorsqu'on assemble ensemble les moitiés de manche, et la seconde moitié de manche (2) comportant un second réseau d'éléments d'encliquetage (6) sur son intérieur respectif tourné vers la première moitié de manche (1), et où les éléments d'encliquetage du premier réseau sont agencés pour venir au contact des éléments d'encliquetage du second réseau par une action d'encliquetage lorsqu'on assemble le manche, et les moitiés de manche étant ainsi reliées ensemble simplement au moyen de l'action d'encliquetage, **caractérisée par le fait que** chaque moitié de manche (1, 2) comprend une ouverture (15) dans laquelle peuvent être insérés les doigts de l'utilisateur, et que les éléments d'encliquetage (4, 6) sont situés sur des côtés respectifs de l'ouverture (15).

2. Scie manuelle selon la revendication 1, **caractérisée par le fait que** la moitié des éléments d'encliquetage comprend des dispositifs d'encliquetage sous la forme d'au moins un épaulement (7), et l'autre moitié des éléments d'encliquetage comprend des dispositifs d'encliquetage sous la forme d'au moins une rainure (5).

3. Scie manuelle selon l'une quelconque des revendications 1 et 2, **caractérisée par le fait que** l'un des réseaux comprend des éléments d'encliquetage (4, 6) comportant des dispositifs d'encliquetage sur son intérieur, et l'autre réseau comprend des éléments d'encliquetage comportant des dispositifs d'encliquetage sur son extérieur.

4. Scie manuelle selon l'une quelconque des revendications précédentes, **caractérisée par le fait que** les éléments d'encliquetage (4, 6) ont la forme d'éléments mâles et femelles coopérant mutuellement, de sorte qu'un élément mâle sur une moitié de manche coopère avec un élément femelle correspondant sur l'autre moitié de manche.

5. Scie manuelle selon la revendication 4, **caractérisée par le fait que** l'une des moitiés de manche (1, 2) comporte uniquement des éléments mâles (6), et que l'autre moitié de manche comporte uniquement des éléments femelles (4).

6. Scie manuelle selon la revendication 4, **caractérisée par le fait que** chaque moitié de manche (1, 2) comporte à la fois des éléments mâles et des éléments femelles (4, 6).

7. Scie manuelle selon l'une quelconque des revendications 4 à 6, **caractérisée par le fait que** à la fois les éléments mâles et les éléments femelles (4, 6) sont de forme cylindrique et que soit les éléments mâles (6) soit les éléments femelles (4) comprennent au moins un épaulement (7) sur respectivement leur extérieur ou leur intérieur, et où l'épaulement (7) est agencé pour coopérer avec au moins une rainure (5) ménagée respectivement sur l'intérieur d'un élément femelle coopérant ou sur l'extérieur d'un élément mâle coopérant, afin d'assurer l'action d'encliquetage.

8. Scie manuelle selon la revendication 7, **caractérisée par le fait que** à la fois les éléments mâles et les éléments femelles (4, 6) ont la forme de cylindres creux coopérant mutuellement par paires, et où le cylindre formant un élément mâle (6) a un diamètre externe qui, au plus, est égal au diamètre interne du cylindre formant l'élément femelle correspondant (4).

9. Scie manuelle selon l'une quelconque des revendications précédentes, **caractérisée par le fait qu'**au moins certains des éléments d'encliquetage (4, 6) sont agencés pour fonctionner aussi comme dispositifs de sécurité de lame de scie.

10. Scie manuelle selon la revendication 9, **caractérisée par le fait que** la lame de scie (3) comporte des trous (17) dans la dite extrémité prévue pour l'assemblage avec le manche, et que les trous (17) sont agencés pour permettre le passage d'au moins certains des éléments d'encliquetage dans au moins l'un des réseaux d'éléments d'encliquetage.

11. Scie manuelle selon l'une des revendications 9 et 10, **caractérisée par le fait qu'**au moins l'une des moitiés de manche comprend, sur son intérieur, au moins un élément de butée (20) pour arrêter tout mouvement de la lame de scie (3) dans une direction vers une main tenant le manche.

12. Scie manuelle selon la revendication 11, **caractérisée par le fait qu'**au moins des parties du bord latéral de la dite extrémité de la lame (3) sont en butée contre les éléments de butée (20) après montage.

13. Scie manuelle selon la revendication 12, **caractérisée par le fait que** les éléments de butée (20) sont formés au moins partiellement d'éléments d'encliquetage ne servant pas à fixer la lame de scie.

14. Procédé de production d'une scie manuelle selon l'une quelconque des revendications précédentes, comprenant une lame de scie (3) et un manche, le procédé comprenant les étapes suivantes :
on fabrique le manche sous la forme de première et seconde moitiés de manche,
on munit la première moitié de manche (1) d'un premier réseau d'éléments d'encliquetage (4) sur son intérieur tourné vers la seconde moitié de manche (2) une fois assemblés, et on munit la seconde moitié de manche (2) d'un second réseau d'éléments d'encliquetage (6) sur son intérieur respectif tourné vers la première moitié de manche (1), et
on assemble ensemble les moitiés de manche à une extrémité de la lame de scie, les éléments d'encliquetage du premier réseau venant en prise avec les éléments d'encliquetage du second réseau par action d'encliquetage, les moitiés de manche étant ainsi maintenues ensemble fermement uniquement au moyen de la dite action d'encliquetage.

15. Procédé selon la revendication 14, **caractérisé par le fait que** l'on ménage des trous (17) dans l'extrémité de la lame de scie, à laquelle le manche est relié, et en ayant les trous (17) agencés pour permettre que certains des éléments d'encliquetage dans au moins l'un des réseaux d'éléments d'encliquetage puissent passer à travers.

16. Procédé selon la revendication 15, **caractérisé par le fait que**, lors de l'assemblage des moitiés de manche (1, 2), on fait passer dans les trous (17), à l'extrémité de la lame de scie, au moins certains des éléments d'encliquetage (4, 6) dans au moins l'un des réseaux d'éléments d'encliquetage, et où la lame de scie est assemblée au manche en même temps que les moitiés de manche sont mutuellement assemblées, et que la fixation de la lame de scie dans le manche est aussi effectuée uniquement au moyen de l'action d'encliquetage.
